# EUROPEAN PATENT APPLICATION

(11) **EP 2 775 805 A2**
(43) Date of publication of application: **10.09.2014**
(21) Application number: 14156973.1
(22) Date of filing: 27.02.2014
(51) Int. Cl.: H05H 1/34

(54) **Non-transferred and hollow type plasma torch**

(30) Priority: 04.03.2013 KR 20130022958; 02.10.2013 KR 20130117660
(71) Applicant: GS Platech Co., Ltd., Daejeon 305-811 (KR)
(72) Inventor: Hwang, Soon-Mo, 138-240 Seoul (KR); Kim, Young-Suk, 305-510 Daejeon (KR); Yoo, Byung-Ju, 305-756 Daejeon (KR); Kim, Myung-Gyu, 306-777 Daejeon (KR); Do, Chul Jin, 305-755 Daejeon (KR)
(74) Representative: Isarpatent

(57) **Abstract**

There is provided a non-transferred and hollow type plasma torch. The non-transferred and hollow type plasma torch according to an embodiment of the present invention includes a rear torch unit, and a front torch unit. Here, the rear torch unit includes a rear electrode housing whose both sides are opened, a hollow rear electrode body that is fixed inside the rear electrode housing, a magnetic coil that is wound around the rear electrode housing corresponding to the rear electrode body, and a rear electrode cover that is inserted into the opened side of the rear electrode housing and detachably formed on an end of the rear electrode body.

## Description

### BACKGROUND

### 1. Field of the Invention

The present invention relates to a non-transferred and hollow type plasma torch.

### 2. Discussion of Related Art

A plasma torch is a device that generates and maintains a plasma arc column between electrodes. When a current flows in the plasma torch through the plasma arc column, electric energy is transformed to thermal energy by electrical resistance of the plasma arc column and heat is applied, thereby obtaining higher temperatures (for example, 20,000 K or greater) and quantities of heat than a heat source of an existing combustion system. As a gas used in the plasma torch, various gases such as compressed air, oxygen, steam, argon, nitrogen, carbon dioxide, hydrogen, and the like may be used depending on the field of application, and they are suitable for the treatment of hazardous waste that contains much organic matters.

According to a long life plasma torch disclosed in the prior art, when the life of an electrode expires, an exchange operation of the electrode is required to be performed by disassembling an anode housing and a cathode housing connected through an insulator. However, since a cooling line is provided inside each of the anode housing and the cathode housing and lead-in wires in a solenoid form are formed in each of the anode housing and the cathode housing, coupling among each of an insulating body, the anode housing, and the cathode housing has to be decoupled in order to replace the electrode, and therefore it requires much time and effort to replace the electrode. In addition, when replacing a hollow anode, the entire hollow anode is required to be replaced, and therefore there is a problem in that costs for the replacement of the electrode increase.

### SUMMARY OF THE INVENTION

The present invention is directed to a non-transferred and hollow type plasma torch whose electrode can be easily replaced.

The present invention is also directed to a non-transferred and hollow type plasma torch in which only a cover of a rear electrode rather than the entire rear electrode can be replaced.

According to an aspect of the present invention, there is provided a non-transferred and hollow type plasma torch including: a rear torch unit; and a front torch unit. Here, the rear torch unit may include a rear electrode housing whose both sides are opened, a hollow rear electrode body that is fixed inside the rear electrode housing, a magnetic coil that is wound around the rear electrode housing corresponding to the rear electrode body, and a rear electrode cover that is inserted into the opened side of the rear electrode housing and detachably formed on an end of the rear electrode body.

Also, the magnetic coil may direct a plasma arc within the non-transferred and hollow type plasma torch to the rear electrode cover by generating a magnetic field.

Also, the rear electrode cover may be detachably coupled to an inner side of the rear electrode housing.

Also, the non-transferred and hollow type plasma torch may further include: an insulating body that is pressed and fixed by the rear torch unit and the front torch unit between the rear torch unit and the front torch unit; an external housing that receives the rear torch unit and the insulating body therein, and whose one side is opened and the other side is coupled to the front torch unit; and a housing cover that is coupled to the external housing at one side of the external housing.

Also, the non-transferred and hollow type plasma torch may further include: a rear torch cooling unit that is formed in an end of the rear electrode housing to take cooling water in and out of the rear electrode housing; and a first cooling water flow space that is formed inside the rear electrode housing and communicates with the rear torch cooling unit.

Also, an end of the rear torch cooling unit may penetrate the housing cover to be exposed to the outside of the external housing.

Also, the front torch unit may include a front electrode housing that is coupled at its one side to the other side of the external housing to press the insulating body, a hollow front electrode that is seated at its one side in the insulating body inside the front electrode housing, and a fixing unit in which the other side of the front electrode housing and the other side of the front electrode are seated and which is detachably coupled to the other side of the front electrode housing.

Also, the non-transferred and hollow type plasma torch may further include: a front torch cooling unit that is formed in the external housing to take cooling water in and out of the front electrode housing; and a second cooling water flow space that is formed inside the front electrode housing and communicates with the front torch cooling unit.

Also, the front electrode and the rear electrode may be arranged so as to be spaced apart from each other on a concentric axis.

According to another aspect of the present invention, there is provided a non-transferred and hollow type plasma torch including: a rear torch unit; and a front torch unit, wherein the rear torch unit includes a rear electrode housing whose both sides are opened, a hollow rear electrode body that is fixed inside the rear electrode housing, and a magnetic coil that is wound around the rear electrode housing corresponding to the rear electrode body and directs a plasma arc within the non-transferred and hollow type plasma torch to an end of the rear electrode body by generating a magnetic field.

Here, the non-transferred and hollow type plasma torch may further include: a rear electrode cover that is inserted into the opened side of the rear electrode housing and detachably formed on one side end of the rear electrode body.

Also, the magnetic coil may be further formed around the rear electrode housing corresponding to the rear electrode cover.

Also, the magnetic coil may direct the plasma arc to the rear electrode cover evenly.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIG. 1 is a cross-sectional view showing a non-transferred and hollow type plasma torch according to an embodiment of the present invention;
FIG. 2 is a view showing a state in which a cover of a rear electrode is separated from a non-transferred and hollow type plasma torch according to an embodiment of the present invention; and
FIG. 3 is a view showing a state in which a front electrode is separated from a non-transferred and hollow type plasma torch according to an embodiment of the present invention.

### DETAILED DESCRIPTION OF EXEMPLARY EMBODIMENTS

Exemplary embodiments of the present invention will be described in detail below with reference to the accompanying drawings. While the present invention is shown and described in connection with exemplary embodiments thereof, it will be apparent to those skilled in the art that various modifications can be made without departing from the spirit and scope of the invention.

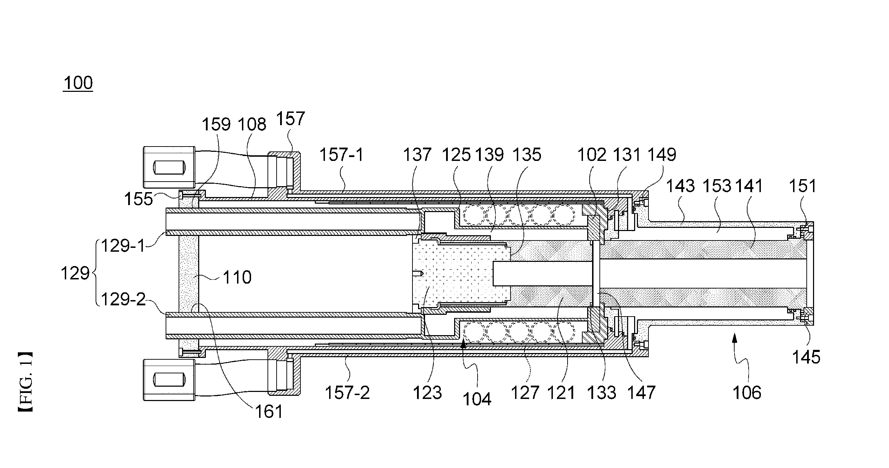

FIG. 1 is a cross-sectional view showing a non-transferred and hollow type plasma torch according to an embodiment of the present invention.

Referring to FIG. 1, the non-transferred and hollow type plasma torch 100 includes an insulating body 102, a rear torch unit 104, a front torch unit 106, an external housing 108, and a housing cover 110.

The insulating body 102 may be seated on a first seating portion 131 formed inside the external housing 108. The insulating body 102 is interposed between the rear torch unit 104 and the front torch unit 106 inside the external housing 108. Specifically, the insulating body 102 is pressed by both of the rear torch unit 104 and the front torch unit 106 between the rear torch unit 104 and the front torch unit 106. In this case, the insulating body 102 is positioned between the rear torch unit 104 and the front torch unit 106 without a separate coupling member. The insulating body 102 may be made of, for example, the material Teflon, but is not limited thereto. That is, the insulating body 102 may be made of various other insulating materials. The insulating body 102 insulates the rear torch unit 104 and the front torch unit 106.

The rear torch unit 104 is formed at one side of the insulating body 102. The rear torch unit 104 includes a rear electrode body 121, a rear electrode cover 123, a rear electrode housing 125, a magnetic coil 127, and a rear torch cooling unit 129.

The rear electrode body 121 is inserted and fixed into the rear electrode housing 125. In this instance, an end of the rear electrode body 121 may be seated on a second seating portion 133 formed inside an end of the rear electrode housing 125. The rear electrode body 121 may be formed in a hollow shape in which a through hole is formed in a center portion thereof, and both sides of the rear electrode body 121 may be opened. The rear electrode body 121 may be made of, for example, oxygen free high-conductive copper (OFHC). OFHC is a material in which electrical conductivity and thermal conductivity of the copper are increased by removing oxygen contained in the copper. However, a material of the rear electrode body 121 is not limited thereto.

The rear electrode cover 123 is detachably coupled to one side of the rear electrode body 121. The one side of the rear electrode body 121 is closed by the rear electrode cover 123. The rear electrode cover 123 may be inserted into the rear electrode body 121 at one side of the rear electrode body 121. In this instance, an end of the rear electrode cover 123 may be seated on a third seating unit 135 formed inside the rear electrode body 121. The rear electrode cover 123 may be coupled to the inside of the rear electrode housing 125 through a first coupling member 137. In this case, the rear electrode cover 123 presses the rear electrode body 121 inside the rear electrode housing 125 to fix the rear electrode body 121. The rear electrode body 121 may be fixed between the rear electrode cover 123 and the insulating body 102 without a separate coupling member. In the present invention, a rear electrode corresponding to the front electrode 141 includes the rear electrode body 121 and the rear electrode cover 123.The rear electrode housing 125 may be formed so as to wrap the rear electrode body 121 and the rear electrode cover 123 inside the external housing 108. The rear electrode housing 125 protects the rear electrode body 121 and the rear electrode cover 123 from an external environment. The end of the rear electrode housing 125 may be seated at one side of the insulating body 102.

The magnetic coil 127 is formed in an outer peripheral surface of the rear electrode housing 125. The magnetic coil 127 may be formed in such a manner to wind a lead-in wire in a solenoid form around the outer peripheral surface of the rear electrode housing 125 several(or many) times. An end of the magnetic coil 127 is connected to a power source (not shown) of the non-transferred and hollow type plasma torch 100, and the other end thereof is connected to the rear electrode housing 125 to be electrically connected to the rear electrode body 121. In this case, a magnetic field may be generated by only the power source (not shown) of the non-transferred and hollow type plasma torch 100 without a separate power source for generating the magnetic field.

The magnetic coil 127 may generate the magnetic field and direct a plasma arc to the rear electrode cover 123 by self-induction. Specifically, by adjusting the number of windings of the magnetic coil 127, a current and/or a voltage applied to each electrode (that is, the rear electrode and the front electrode), and the like, the plasma arc may be directed to the rear electrode cover 123. In this case, erosion and consumption generally occur only in the rear electrode cover 123, and therefore only the rear electrode cover 123 is required to be replaced without replacing the entire rear electrode body 121. In this instance, the rear electrode cover 123 may be easily replaced and the cost of the replacement reduced. When directing the plasma arc toward the rear electrode cover 123, it is preferable that the life of the rear electrode cover 123 be extended by allowing erosion to occur evenly in the entire area of the rear electrode cover 123. That is, the plasma arc may be evenly directed over the entire area of a end portion of the rear electrode cover 123 which faces the rear electrode body 121. In addition, the strength of a magnetic field of the magnetic coil 127 may be adjusted by itself in accordance with the strength of the plasma arc by self-induction even without a separate magnetic field adjustment device.

Here, the magnetic coil 127 is formed up to one side (that is, front end) of the rear electrode cover 123, but the present invention is not limited thereto. For example, the magnetic coil 127 may be formed up to the other side (that is, rear end) of the rear electrode cover 123 in the rear electrode housing 125. In this case, directing of the plasma arc by self-induced magnetic field may be more efficiently performed, and the life of the rear electrode cover 123 may be improved.

The rear torch cooling unit 129 is formed at an end of the rear electrode housing 125. In this instance, the rear torch cooling unit 129 may be integrally formed with the rear electrode housing 125. The rear torch cooling unit 129 prevents the rear torch unit 104 from being overheated. That is, the rear electrode body 121 is cooled by the rear torch cooling unit 129, thereby the abrasion of the rear electrode body 121 due to a high temperature may be minimized and the life of the rear electrode body 121 may be extended.

The rear torch cooling unit 129 includes a first cooling water inlet 129-1 through which cooling water is injected into the rear torch cooling unit 129 and a first cooling water outlet 129-2 through which the cooling water is discharged from the rear torch cooling unit 129. One side of each of the first cooling water inlet 129-1 and the first cooling water outlet 129-2 may be formed so as to penetrate the housing cover 110. A first cooling water flow space 139 that communicates with the first cooling water inlet 129-1 and the first cooling water outlet 129-2 is formed inside the rear electrode housing 125. In this case, the cooling water injected through the first cooling water inlet 129-1 flows in the first cooling water flow space 139 to cool the rear electrode body 121. The cooling water heat-exchanged with the rear electrode body 121 is discharged to the outside through the first cooling water outlet 129-2.

The front torch unit 106 is formed at the other side of the insulating body 102. The front torch unit 106 includes a front electrode 141 and a front electrode housing 143.

The front electrode 141 is inserted into and fixed to the front electrode housing 143. In this instance, an end of the front electrode 141 is seated on the other side of the insulating body 102. The other end of the front electrode 141 is seated on a fixing unit 145. The front electrode 141 has a hollow shape, and both sides of the front electrode 141 may be opened. The front electrode 141 may be made of, for example, OFHC, but is not limited thereto. The front electrode 141 may be formed so as to be spaced apart from the rear electrode body 121 by an interval, and faces the rear electrode body 121. In this instance, the rear electrode body 121 and the front electrode 141 may be formed so as to face each other on a concentric axis in terms of performance and maintainability(repair or replacement) of the non-transferred and hollow type plasma torch 100.

A gas flow space 147 may be formed between the rear electrode body 121 and the front electrode 141. Here, a gas injected through a gas inlet (not shown) flows in the gas flow space 147 to generate a plasma arc. As the gas injected through the gas inlet (not shown), various gases such as compressed air, oxygen, steam, argon, nitrogen, carbon dioxide, hydrogen, and the like may be used, and the gas is not limited thereto. Various gases may be used depending on a field in which the non-transferred and hollow type plasma torch 100 is applicable.

The front electrode housing 143 is formed so as to wrap the front electrode 141. The front electrode housing 143 protects the front electrode 141 from the external environment. An end of the front electrode housing 143 is seated on the other side of the insulating body 102 and an end of the external housing 108. The other end of the front electrode housing 143 is seated on the fixing unit 145. In this instance, an end of the front electrode housing 143 may be coupled to the external housing 108 by a second coupling member 149, and the other end thereof may be coupled to the fixing unit 145 by a third coupling member 151. In this case, the front electrode 141 and the front electrode housing 143 press and fix the insulating body 102 at the other side of the insulating body 102. The fixing unit 145 presses and fixes the front electrode 141 at the other end of the front electrode 141. A second cooling water flow space 153 may be formed inside the front electrode housing 143.

Here, the front electrode 141 has a form of a cartridge, and therefore the front electrode 141 may be easily separated and replaced. That is, since the magnetic coil is not formed in the front torch unit 106 and the end of the front electrode 141 is seated on the other side of the insulating body 102 without a separate coupling member, the front electrode 141 can be replaced only by decoupling the third coupling member 151 and removing the front electrode 141.

The external housing 108 may be formed so as to wrap the insulating body 102, the rear torch unit 104, and a part of the front torch unit 106. The external housing 108 protects the insulating body 102 and the rear torch unit 104 from the external environment. In particular, the insulating body 102 and the magnetic coil 127 may be protected by the external housing 108 without being exposed to the outside. An end of the external housing 108 is coupled to the housing cover 110 by a fourth coupling member 155, and the other end thereof is coupled to the front torch unit 106 by the second coupling member 149.

A front torch cooling unit 157 may be formed in the external housing 108. In this instance, the front torch cooling unit 157 may be formed in an outer peripheral surface of the external housing 108. The front torch cooling unit 157 prevents the front torch unit 106 from being overheated. That is, by cooling the front electrode 141 through the front torch cooling unit 157, the abrasion of the front electrode 141 due to a high temperature may be minimized, and the life of the front electrode 141 may be extended.

The front torch cooling unit 157 includes a second cooling water inlet 157-1 through which cooling water is injected to the front torch cooling unit 157 and a second cooling water outlet 157-2 through which the cooling water is discharged from the front torch cooling unit 157. Each of the second cooling water inlet 157-1 and the second cooling water outlet 157-2 communicates with a second cooling water flow space 153 formed inside the front electrode housing 143. In this case, the cooling water injected through the second cooling water inlet 157-1 flows into the second cooling water flow space 153 to cool the front electrode 141. The cooling water heat-exchanged with the front electrode 141 may be discharged to the outside through the second cooling water outlet 157-2.

The housing cover 110 is coupled to the external housing 108 by a fourth coupling member at an end of the external housing 108. A first through hole 159 and a second through hole 161 may be formed in the housing cover 110. Here, the first cooling water inlet 129-1 is inserted into the first through hole 159 and the first cooling water outlet 129-2 is inserted into the second through hole 161 to penetrate the housing cover 110. The housing cover 110 is made of an insulating material for the purpose of insulation between the external housing 108 and each of the first cooling water inlet 129-1 and the first cooling water outlet 129-2.

Meanwhile, except for the insulating body 102, the rear electrode body 121, the front electrode 141, and the housing cover 110, the non-transferred and hollow type plasma torch 100 may be substantially made of stainless steel. The stainless steel has excellent mechanical strength, corrosion resistance, low thermal conductivity(lower than copper)(suitable for reducing a heat loss to the outside), and excellent permeability of a magnetic field. However, the non-transferred and hollow type plasma torch 100 is not limited to this, and other materials may be used.

According to an embodiment of the present invention, by directing the plasma arc toward the rear electrode cover 123, erosion and consumption of the rear electrode body 121 may be minimized, thereby extending the life of the non-transferred and hollow type plasma torch 100. In this instance, only the rear electrode cover 123 in which erosion and consumption occur may be replaced, thereby reducing the cost and effort of replacing parts. The rear electrode cover 123 has a form of a cartridge that is easily replaced and repaired. In addition, the front electrode 141 also has a form of a cartridge that is easily replaced and repaired.

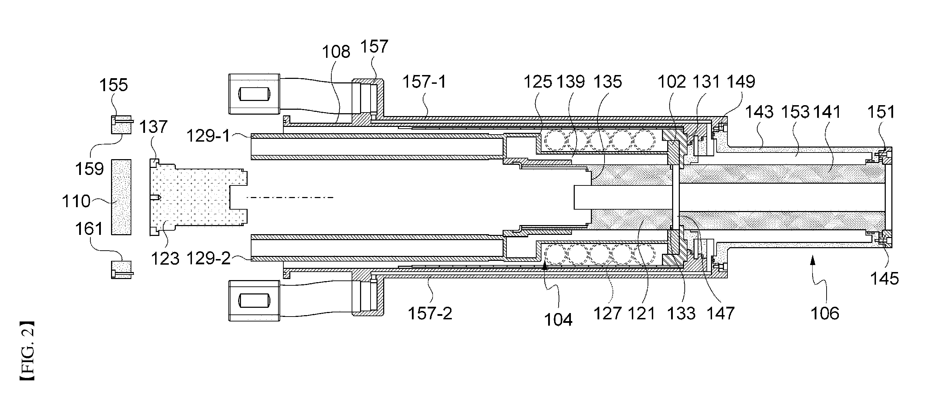

FIG. 2 is a view showing a state in which a cover of a rear electrode is separated from a non-transferred and hollow type plasma torch according to an embodiment of the present invention.

Referring to FIG. 2, in the non-transferred and hollow type plasma torch 100, by adjusting the number of windings of the magnetic coil 127, a current and/or a voltage applied to the rear electrode body 121 and the front electrode 141, and the like, the plasma arc may be directed to the rear electrode cover 123. In this case, erosion and consumption generally occur only in the rear electrode cover 123, and therefore it is necessary to periodically replace (or repair) the rear electrode cover 123. In this instance, in order to lengthen a replacement cycle of the rear electrode cover 123, erosion caused by the plasma arc should occur evenly in the entire area of the rear electrode cover 123 when directing the plasma arc toward the rear electrode cover 123.

Here, in the rear electrode cover 123, 1) the fourth coupling member 155 is decoupled to remove the housing cover 110 from the external housing 108, and 2) the first coupling member 137 is decoupled to remove the rear electrode cover 123 from the rear electrode housing 125, and the rear electrode cover 123 is thereby easily replaced (or repaired). That is, the rear electrode cover 123 has a form of a cartridge that is easily replaced (repaired). In this instance, by merely taking the rear electrode body 121 out of the rear electrode housing 125 in this state, the rear electrode cover 121 may also be easily separated.

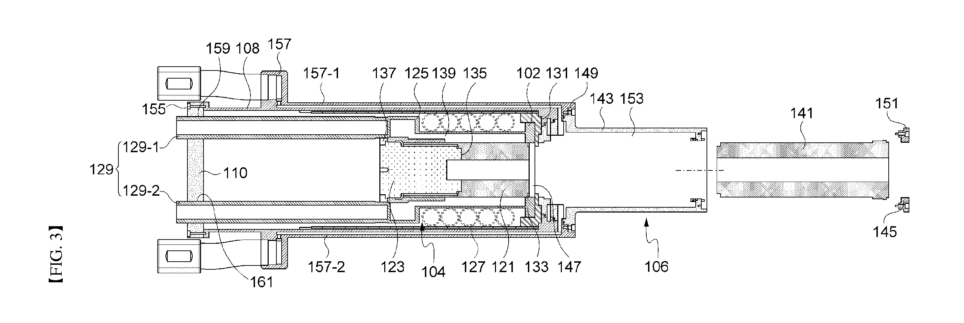

FIG. 3 is a view showing a state in which a front electrode is separated from a non-transferred and hollow type plasma torch according to an embodiment of the present invention.

Referring to FIG. 3, when there is a need to replace the front electrode 141, the third coupling member 151 is decoupled to remove the fixing unit 145 from the front electrode housing 143, and then the front electrode 141 is taken out of the front electrode housing 143, and the front electrode 141 is thereby easily replaced or repaired. That is, the front electrode 141 has a form of a cartridge that is easily replaced or repaired.

As described above, according to the embodiments of the present invention, erosion and consumption of the rear electrode body may be minimized by directing the plasma arc toward an end of the rear electrode, thereby extending the life of the non-transferred and hollow type plasma torch. In this instance, only the rear electrode cover is replaced after occurrence of erosion and consumption, thereby reducing the cost and effort of replacing parts. The rear electrode cover has a form of a cartridge that is easily replaced or repaired. In addition, the front electrode also has the form of the cartridge that is easily replaced or repaired.

It will be apparent to those skilled in the art that various modifications can be made to the above-described exemplary embodiments of the present invention without departing from the spirit or scope of the invention. Thus, it is intended that the present invention covers all such modifications provided they come within the scope of the appended claims and their equivalents.

## Claims

1. A non-transferred and hollow type plasma torch comprising:
a rear torch unit; and
a front torch unit,
wherein the rear torch unit includes a rear electrode housing whose both sides are opened, a hollow rear electrode body that is fixed inside the rear electrode housing, a magnetic coil that is wound around the rear electrode housing corresponding to the rear electrode body, and a rear electrode cover that is inserted into the opened side of the rear electrode housing and detachably formed on an end of the rear electrode body.

2. The non-transferred and hollow type plasma torch of claim 1, wherein the magnetic coil directs a plasma arc within the non-transferred and hollow type plasma torch to the rear electrode cover by generating a magnetic field.

3. The non-transferred and hollow type plasma torch of claim 1, wherein the rear electrode cover is detachably coupled to an inner side of the rear electrode housing.

4. The non-transferred and hollow type plasma torch of claim 1, further comprising:
an insulating body that is pressed and fixed by the rear torch unit and the front torch unit between the rear torch unit and the front torch unit;
an external housing that receives the rear torch unit and the insulating body therein, and whose one side is opened and the other side is coupled to the front torch unit; and
a housing cover that is coupled to the external housing at one side of the external housing.

5. The non-transferred and hollow type plasma torch of claim 4, further comprising:
a rear torch cooling unit that is formed in an end of the rear electrode housing to take cooling water in and out of the rear electrode housing; and
a first cooling water flow space that is formed inside the rear electrode housing and communicates with the rear torch cooling unit.

6. The non-transferred and hollow type plasma torch of claim 5, wherein an end of the rear torch cooling unit penetrates the housing cover to be exposed to the outside of the external housing.

7. The non-transferred and hollow type plasma torch of claim 4, wherein the front torch unit includes:
a front electrode housing that is coupled at its one side to the other side of the external housing to press the insulating body,
a hollow front electrode that is seated at its one side in the insulating body inside the front electrode housing, and
a fixing unit in which the front electrode housing and the other side of the front electrode are seated and which is detachably coupled to the other side of the front electrode housing.

8. The non-transferred and hollow type plasma torch of claim 7, further comprising:
a front torch cooling unit that is formed in the external housing to take cooling water in and out of the front electrode housing; and
a second cooling water flow space that is formed inside the front electrode housing and communicates with the front torch cooling unit.

9. The non-transferred and hollow type plasma torch of claim 4, wherein the front electrode and the rear electrode body are arranged so as to be spaced apart from each other on a concentric axis.

10. A non-transferred and hollow type plasma torch comprising:
a rear torch unit; and
a front torch unit,
wherein the rear torch unit includes a rear electrode housing whose both sides are opened, a hollow rear electrode body that is fixed inside the rear electrode housing, and a magnetic coil that is wound around the rear electrode housing corresponding to the rear electrode body and directs a plasma arc within the non-transferred and hollow type plasma torch to an end of the rear electrode body by generating a magnetic field.

11. The non-transferred and hollow type plasma torch of claim 10, further comprising:
a rear electrode cover that is inserted into the opened side of the rear electrode housing and detachably formed on an end of the rear electrode body.

12. The non-transferred and hollow type plasma torch of claim 11, wherein the magnetic coil is further formed around the rear electrode housing corresponding to the rear electrode cover.

13. The non-transferred and hollow type plasma torch of claim 11, wherein the magnetic coil directs the plasma arc to the rear electrode cover evenly.
